# EUROPEAN PATENT SPECIFICATION

(11) **EP 3 444 110 B1**
(45) Date of publication and mention of the grant of the patent: **04.11.2026**
(21) Application number: 18398007.7
(22) Date of filing: 06.08.2018
(51) Int. Cl.: B32B 5/16, B32B 7/12, B32B 37/26, B32B 9/02, B32B 9/04, B32B 21/02, B32B 21/12, B32B 38/06, B44C 1/17, B44C 5/04, E04F 13/16, E04F 15/10

(54) **PROCESS FOR MANUFACTURING A DECORATED CORK TILE AND DECORATED CORK TILE**
VERFAHREN ZUR HERSTELLUNG VON EINER DEKORIERTEN KORKFLIESE UND DEKORIERTE KORKFLIESE
PROCÉDÉ DE FABRICATION D'UN PANNEAU DE LIÈGE DÉCORÉ ET PANNEAU DE LIÈGE DÉCORÉ

(30) Priority: 16.08.2017 US 201715678383
(43) Date of publication of application: 20.02.2019
(73) Proprietor: Corkart - Indústria de Cortiças, S.A., 7080-341 Vendas Novas (PT)
(72) Inventor: Brandão, José Manuel Martins, 7080-341 Vendas Novas (PT)
(74) Representative: do Nascimento Gomes, Rui

(56) References cited:
- WO-A1-2016/008783
- WO-A1-2017/004613
- WO-A2-2011/141850
- US-A- 4 919 994
- US-A- 5 662 977
- US-A1- 2016 368 276
- US-A1- 2017 190 156
- US-B1- 6 617 008

## Description

### FIELD OF THE INVENTION

The present invention relates to a printing process for printing a design onto cork tiles for flooring, wall coverings, and ceilings.

### BACKGROUND OF THE INVENTION

A background of the invention is provided with regard to cork based solutions.

Cork is a natural material that is harvested from the bark of cork oak trees, which are endemic to Southwest Europe and Northwest Africa. Cork is extracted by removing the bark from the trees. Cork is a renewable material in that the cork oak tree regenerates naturally after each extraction of its bark. During a typical lifespan of 150 to 200 years, a cork oak tree can be extracted 15-18 times.

Cork is elastic, highly impermeable, and fire retardant. The characteristics of cork are due to its cellular structure. Cork is composed of small cells of suberin, which are filled with a gas mixture similar to air. The unique structure and materials of cork provide cork with many useful properties. For example, its high-permeability and elasticity make cork suitable for the most common use as a bottle stopper. The same characteristics also make cork suitable for use as a gasket material, fishing floats and buoys, as well as handles for fishing poles. Cork's cellular form and fire retardant properties also make it suitable for use as acoustic and thermal insulation in-house walls, floors, ceilings, and façades.

Cork is also increasingly used as a flooring and wallcovering material. The following properties of cork make it highly suitable for use as a flooring material:
- Durable - the elastic properties of cork allow it to bounce back so that furniture indentations are not permanent;
- Healthy - cork is anti-microbial, naturally resistant to mold, mildew, and termites, and it does not off-gas or shared microfibers;
- Safe - cork is fire resistant and produces less smoke and less toxic material than vinyl flooring during combustion;
- Comfortable - a cork floor provides a comfortable cushion underfoot because it gives one compressed, and is also a natural thermal and acoustic insulator.

Because the cork oak tree regenerates the extracted cork bark, the harvesting practice is sustainable. Therefore the use of cork has little negative impact on the environment. Further the manufacturing process for cork flooring generates almost no waste. In fact, cork flooring uses the residuals from the production of cork stoppers. The residuals are finely ground and combined with binders such as, for example, polyurethane. Increasingly, pigments are added to create different colors or patterns. However, the known methods of applying colors or patterns are difficult to use and the appearance of cork floor and wall coverings are still limited.

The most used technique of prior art consists of direct printing with a digital printer, the digital printing of a certain color or pattern being performed directly onto the base of a woody plant material tile, such as a HDF or cork tile. Such solution is not only expensive - digital printers and inks are costly - as well as it provides an uncertain result, mainly due to different ink absorption rates. Examples are patent application US4919994A which discloses a dry transfer graphics article comprising a carrier film, a graphic pattern clingingly bonded to the carrier, and a continuous adhesive layer covering both the graphic pattern and exposed carrier surface, seeking self-weeding transfer of the graphic to a substrate. Patent application US5662977A discloses a process for manufacturing plastic siding panels with outdoor weatherable embossed surfaces, involving extruding a plastic sheet, overlaying a flexible carrier film with a matte release layer and decorative coating, and applying pressure with an embossing roll to transfer the coating and emboss a three-dimensional pattern. Patent US6617008B1 discloses a decorative film or sheet with a laminate structure comprising a surface layer made of a resin including a specific polypropylene homopolymer or copolymer and a thermoplastic elastomer, not referring to a transfer technique or such an operation onto a cork tile.

### BRIEF SUMMARY OF THE INVENTION

An object of the invention is to present a new method for applying a color pattern or design to a cork tile according to claim 1, used for flooring, wall covering, or ceiling covering. The term "tile" is used in the specification and claims to include any inlay, piece, sheet, board, or plank or other similarly shaped objects that can be used alone or together with other such inlays, pieces, sheets, boards, or planks to cover a floor, wall, or ceiling. Further, the tile may include click-lock flooring pieces that are connected to each other using interlocking elements, i.e., tongue and groove, or flooring pieces that lie next to each other such as glue-down tiles. The tile may comprise a laminate made of at least one layer of cork or may be made entirely of cork.

The object of the present invention is met by a process according to claim 1 for applying a color pattern or design to a woody plant material tile which is a cork tile, including the steps of providing a release film, printing a design layer on the release film, applying a glue layer on the design layer so that the design layer is between the glue layer and the release film, and laminating the design layer and the glue layer onto said woody plant material top surface of the woody plant material tile using a heated laminating machine, so that the glue layer and the design layer are released from the release film and form the color pattern or design on the woody plant material top surface. It consists of a solution based on a transfer technique, which provides certainty on the creation of a color pattern or design on the woody plant material tile, at low cost, while avoiding direct digital printing.

The woody plant material comprising cork comprises at least one layer of cork material or may be made entirely of cork material.

Furthermore, according to the invention, the cork top surface is formed by agglomerating cork granules with a binder and curing at a temperature of 140-180°C. The cork granules of the cork top surface have a particle size of 0.5-4 mm and a density of 450-600 Kg/m³, more preferably 0.5-1mm and a density of 500-600 Kg/m³. Such granule values provide for a cork based tile with a highly regular surface, which may be printed as homogeneously as possible, with no imperfections. Preferably, the specific density of the cork granules is of 65-90 Kg/m³.

In one embodiment, the cork tile includes a backing layer arranged below the cork top surface. The backing layer is formed by agglomerating cork granules with a binder and curing at a temperature of 140°C or less. The cork granules of the backing layer have a particle size of 0.5-4 mm and a density of 180-220 kg/m³, more preferably 1-2 mm and a density of 180-220 Kg/m³. Such granule values for the backing layer provide better acoustic (insulation) properties, as well as a higher dimensional stability of the tile. Preferably, the specific density of the cork granules is of 70-80 Kg/m³.

A thickness of the combined design layer and glue layer, which forms the color pattern or design is 20-50 microns.

According to another embodiment, the release film is a PET film.

The step of laminating is performed at a temperature of 100-190°C and at a pressure of 400-600 bar. Such specific values of pressure and temperature provide enhanced results, as regards the adherence of the glue/ink to the woody plant material tile.

In one embodiment, the heated laminating machine is a heated calendar and includes rolls having a circumference of 520-1500 mm. In an alternative embodiment, the heated laminating machine is a heated machine press.

The glue is an acrylic resin or a silicon dioxide and the design layer includes an ink comprising a polyamine ester with a pigment. The polyamine ester includes a vinyl chloride-acetate copolymer and an ester diluent. Such formulation provides for higher opacity of the design layer and an enhanced adherence to the woody plant material tile.

In one embodiment, the step of printing is performed using an engraved cylinder. If multiple colors are printed, a plurality of engraved cylinders are used. As an alternative, inkjet printing and/or electrophotography may be used.

In one embodiment, a release agent is applied to the release film, wherein the step of printing includes printing the design layer on the release film.

According to an embodiment, the cork top surface is mounted on a base layer of the cork tile prior to the step of laminating. The base layer comprises a fiberboard plank or a wood plank.

To form a simulated wood grain or stone surface, the step of laminating optionally includes using an embossed roll or an embossed plate according to one embodiment of the present invention.

If a finishing coat or polymer layer is applied to the color pattern or design, the finishing coat or polymer layer may be embossed.

It is also an object of the present invention a decorated tile which comprises i) a color pattern or design and ii) a cork tile, the color pattern or design being applied to the cork tile by the process of the present invention, in any of the described configurations of such process. The cork tile comprises at least one layer of cork material or is made entirely of cork material.

The various features of novelty which characterize the invention are pointed out with particularity in the claims annexed to and forming a part of the disclosure. For a better understanding of the invention, its operating advantages, specific objects attained by its use, reference should be had to the drawings and descriptive matter in which there are illustrated and described preferred embodiments of the invention.

### BRIEF DESCRIPTION OF THE DRAWINGS

Fig. 1 is a schematic diagram of an apparatus for laminating a design onto a cork tile according to an embodiment of the present invention;
Fig. 2 is a schematic diagram of an apparatus for laminating a design onto a cork tile according to another embodiment of the present invention;
Fig. 3 is a schematic diagram of an apparatus for laminating a design onto a cork tile according to yet another embodiment of the present invention;
Fig. 4 is a flow diagram for a method of laminating a design specifically onto a cork tile according to an embodiment of the present invention;
Fig. 5 is a more detailed flow diagram of a step of laminating; and
Fig. 6 is a cross-sectional view of a cork tile to be laminated with a design according to an embodiment of the present invention.

### DETAILED DESCRIPTION OF THE PREFERRED EMBODIMENTS

In the subsequent detailed description, the woody plant material tile comprises cork, thereby being designated a cork tile.

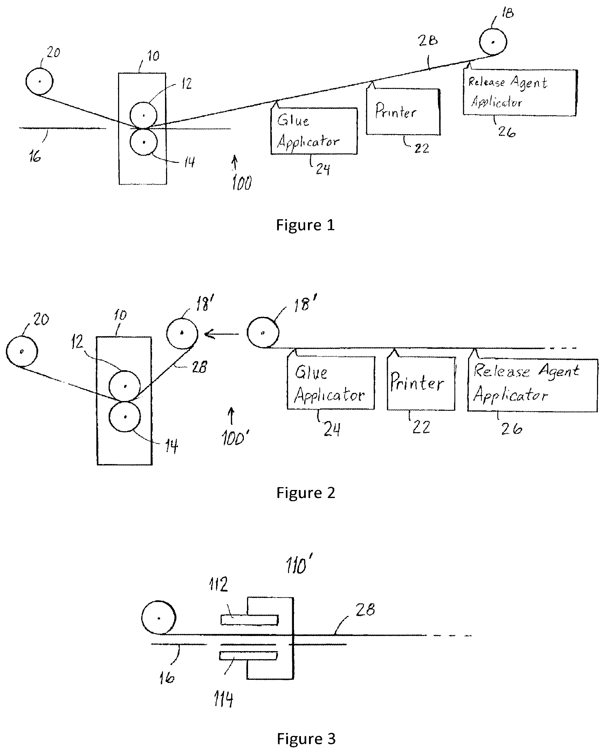

Figure 1 shows an apparatus 100 for applying a color pattern or design to a cork tile such as a floor tile or wall tile. The apparatus 100 includes a calendar 10 with calendar rolls 12, 14, a release film supply reel 18, a release film take-up reel 20, a printer 22, a glue applicator 24, and a release agent applicator 26.

As a release film 28 is unwound from the supply reel 18, the release film 28 passes the release agent applicator 26, which applies a release agent to the release film. In one embodiment, the release film 28 is a Polyethylene terephthalate (PET) film. However, any known or hereafter developed release film may be used. The printer 22 is arranged downstream of the release agent applicator 26 and prints a design or pattern of a coloring agent such as ink or toner onto the release film after the release agent is applied. In a preferred embodiment, the printing is performed using ink applied by one or more engraved cylinders, i.e., one cylinder for each color of ink to be printed. Instead of using an engraved cylinder, printing may alternatively include other printing machines such as for example inkjet printing or electro-photography printing. The ink may include a polyamine ester, such as one made from a vinyl chloride-acetate copolymer and an ester diluent. The ink also will include a pigment (titanium dioxide for white-collar, and organic pigment for other colors). Instead of ink, other coloring agents such as, for example, toner can also be used. A glue applicator 24 downstream of the printer 22 applies a glue coating on the ink layer. In a preferred embodiment, the glue comprises an acrylic resin or silicon dioxide. However, other glues may alternatively by used.

The ink and the glue are dried on the release film and, after the glue and ink have dried, the release film with the glue and the ink is led through rolls 12, 14 of the calendar 10. The rolls 12, 14 apply pressure of 400-600 bar at a temperature of 100-190°C so that the glue and the ink are released from the release film and laminated onto the cork tile 16.

The temperature and pressure cause the glue and the ink to mix together and form one composite layer on the cork tile. In another embodiment, the glue and ink remain as separate layers. In both cases, the pressure and temperature allow the glue to become tacky so that the glue adheres to the cork tile 16. After passing through the rolls 12, 14, the take-up reel 20 downstream of the calendar 10 collects the release film.

In the embodiment of Figure 1, the release film is fed to the calendar 10 directly after the glue and ink is applied. Figure 2 shows an alternative embodiment of an apparatus 100' according to the present invention, in which the release film is gathered on reel 18' after the glue and ink is applied so that the release film can be stored and subsequently connected to the apparatus 100' when required.

Figures 1 and 2 show embodiments using a calendar 10. As an alternative, Figure 3 shows an embodiment in which a machine press 110' is used instead of the calendar 10. In the Figure 3 embodiment, the cork tile and release film are pressed between two plates 112, 114 of the machine press 110 to laminate the glue and ink layers on to the cork tile 16. The plates 112, 114 apply a pressure of 400-600 bar at a temperature of 100-190°C.

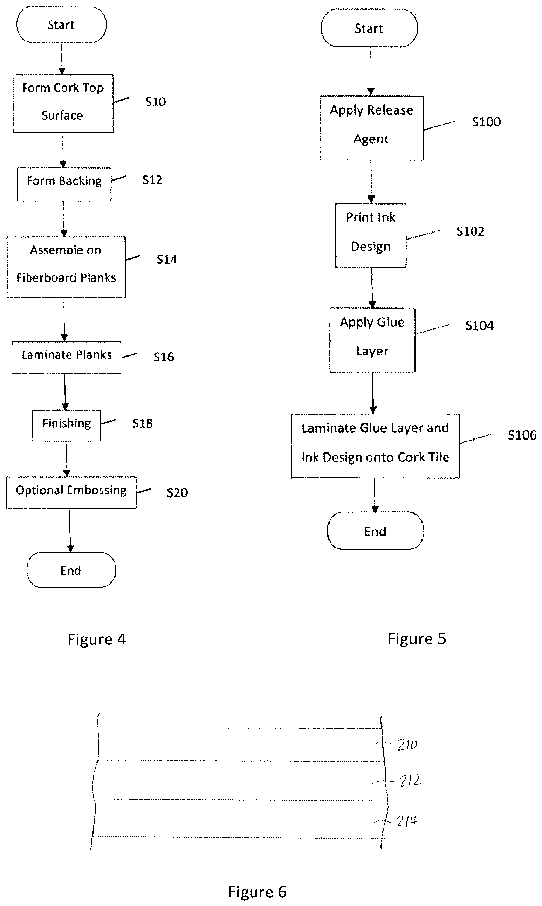

Fig. 4 is a flow diagram illustrating steps of the present invention for laminating an ink layer onto a cork tile. At step S10, a cork top surface of the cork tile is created by agglomeration of cork grains, i.e., resulting from post-industrial use, with cork granules having a particle size of 0.5-1 mm, and a density between 500-600 kg/m³. The agglomeration is performed using water-based polyurethane binders and the cork top surface is cured at a temperature between 140-180°C for 12 hours. The cork top surface of the cork tile has a thickness of 1-6 mm.

In step S12, a backing layer is formed by the same agglomeration process, but with cork grains having a particle size of 1-2 mm, and a density between 180-220 kg/m³. The backing layer can be cured at a temperature of 140°C or less. The backing layer is used as an underlayer at a bottom of the cork tile. The backing layer of the cork tile has a thickness of 1-4 mm.

In step S14 the cork top surface and the backing are applied to a fiberboard plank using water-based adhesives with a specificity D3 or higher on heated plate presses to form the cork tile 16. Although fiberboard planks are used in the preferred embodiment, any known or hereafter developed base layer for flooring or wallcovering may be used. As an example, wood or another cork layer may be used instead of the fiberboard planks. Figure 6 shows a cross-section of the assembled cork tile with the cork top surface 210, the base layer 212, and the backing layer 214. Additional layers may be applied, for example, protective layers and adhesive layers. In one embodiment, the backing layer 212 and/or the base layer 212 may be omitted.

In step S16, and ink layer and glue layer are laminated onto the assembled cork tile, as described in more detail below. After the glue and ink layers are transferred to the cork tile, a finish layer such as urethane or polymers may is applied in step S18. For residential applications, the finish layer may include water-based or acrylic varnishes. For commercial applications, high wear resistance polymers, which are free of polyvinyl chloride (PVC), such as PET, polyurethane (PU), polyethylene (PE), and polystyrene (PS). These polymers may have different compositions to achieve specific performance characteristics.

The final product may be embossed, step S20. The embossing may be performed before or after the step of applying the finish. The embossing may be accomplished using embossing rolls, i.e., in the calendar 10 of the embodiments of Figures 1 and 2, or using embossing plates, i.e., in the machine press 110 of the embodiment of Figure 3. If polymers are used during the step of finishing, the embossing must be done after the polymer is applied with a separate embossing device 30 (shown in dotted lines in Figure 2). In a further embodiment, an already embossed polymer may be applied to the cork tile.

Figure 5 describes the lamination process. In step S100 a release agent is applied to the release film. Subsequently, a design ink is printed on to the release film, step S102. As stated above, the design layer is printed using an engraved cylinder with ink in a preferred embodiment. However, the design layer may also be printed using any known or hereafter developed printing method such as, for example, inkjet printing and electro- photography.

After the design layer is printed, a glue layer is applied on the ink layer, step S104. The glue comprises an acrylic resin or silicon dioxide. The glue layer and design layer are dried and then laminated onto the cork tile, step S106. The lamination can be accomplished using a calendar or a machine press as described above. In both cases, the lamination is accomplished with a pressure of 400-600 bar and at a temperature of 100- 190°C.

Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

As will be clear to one skilled in the art, the present invention should not be limited to the embodiments described herein, and a number of changes are possible which remain within the scope of the present invention as defined in the appended claims.

Of course, the preferred embodiments shown above are combinable, in the different possible forms, being herein avoided the repetition all such combinations.

## Claims

1. A process for forming a cork tile and applying a color pattern or design to a cork tile, comprising the steps of:
- producing a cork tile including agglomerating cork granules with a binder and curing at a temperature of 140-180°C, the cork granules of the cork top surface having a particle size of 0.5-4 mm and a density of 450-600 Kg/m³, and thereby forming a cork top surface of the cork tile,
- providing a release film;
- printing a design layer on the release film;
- applying a glue layer on the design layer so that the design layer is between the glue layer and the release film;
- laminating the design layer and glue layers onto the cork top surface of the cork tile using a heated laminating machine, so that the glue layer and the design layer, in a transfer technique, are released from the release film and form the color pattern or design on the cork top surface,
wherein the step of laminating is performed at a temperature of 100-190°C and at a pressure of 400-600 bar.

2. The process of claim 1, wherein the cork tile comprises at least one layer of cork material or is made entirely of cork material.

3. The process of claim 1, the cork granules of the cork top surface having a particle size of 0.5-1 mm and a density of 500-600 Kg/m3.

4. The process of the previous claim, further comprising forming a backing layer of the cork tile arranged below the cork top surface by agglomerating cork granules with a binder and curing at a temperature of 140°C or less, the cork granules of the backing layer having a particle size of 0.5-4 mm and a density of 180-220 kg/m³, more preferably 1-2 mm and a density of 180-220 kg/m³.

5. The process of any of the preceding claims, wherein a thickness of the color pattern or design layer is 20-50 microns.

6. The process of any of the preceding claims, wherein the release film is a PET film.

7. The process of any of the preceding claims, wherein the heated laminating machine is a heated calendar, optionally the calendar including rolls having a circumference of 520-1500 mm.

8. The process of any of the claims 1-6, wherein the heated laminating machine is a heated machine press.

9. The process of any of the preceding claims, wherein the glue layer includes an acrylic resin or a silicon dioxide and the design layer uses an ink having a polyamine ester with a pigment, optionally the polyamine ester including a vinyl chloride-acetate copolymer and an ester diluent.

10. The process of any of the preceding claims, wherein the step of printing is performed using an engraved cylinder.

11. The process of any of the preceding claims, further comprising the step of applying a release agent to the release film, wherein the step of printing includes printing the layer of ink on the release film.

12. The process of any of the preceding claims, wherein the cork top surface is mounted on a base layer of the cork tile prior to the step of laminating, optionally the base layer being fiberboard plank or wood plank.

13. The process of any of the preceding claims, wherein the step of laminating includes using an embossed roll or an embossed plate.

14. A decorated tile **characterized in that** it is prepared according to the process of any of the preceding claims and comprises i) a color pattern or design and ii) a cork tile, where the cork tile comprises at least one layer of cork material or is made entirely of cork material.

## Patentansprüche

1. Verfahren zur Herstellung einer Korkfliese und zum Aufbringen eines Farbmusters oder -designs auf eine Korkfliese, umfassend die folgenden Schritte:
- Herstellung einer Korkfliese durch Agglomerieren von Korkgranulat mit einem Bindemittel und Aushärten bei einer Temperatur von 140-180 °C, wobei das Korkgranulat der Korkoberfläche eine Partikelgröße von 0,5-4 mm und eine Dichte von 450-600 kg/m³ aufweist, wodurch eine Korkoberfläche der Korkfliese gebildet wird,
- Bereitstellung einer Trennfolie;
- Aufdrucken einer Dekorschicht auf die Trennfolie;
- Auftragen einer Klebeschicht auf die Dekorschicht, sodass sich die Dekorschicht zwischen der Klebeschicht und der Trennfolie befindet;
- Laminieren der Dekorschicht und der Klebeschichten auf die Korkoberfläche der Korkfliese unter Verwendung einer beheizten Laminiermaschine, so dass die Klebeschicht und die Dekorschicht in einem Transferverfahren von der Trennfolie abgelöst werden und das Farbmuster oder -design auf der Korkoberfläche bilden,
wobei der Laminierungsschritt bei einer Temperatur von 100-190 °C und bei einem Druck von 400-600 bar durchgeführt wird.

2. Verfahren nach Anspruch 1, wobei die Korkfliese mindestens eine Schicht aus Korkmaterial umfasst oder vollständig aus Korkmaterial besteht.

3. Verfahren nach Anspruch 1, wobei die Korkgranulate der Korkoberfläche eine Partikelgröße von 0,5-1 mm und eine Dichte von 500-600 kg/m³ aufweisen.

4. Verfahren nach dem vorstehenden Anspruch, das ferner das Bilden einer unterhalb der Korkoberfläche angeordneten Trägerschicht der Korkfliese durch Agglomerieren von Korkgranulat mit einem Bindemittel und Aushärten bei einer Temperatur von 140 °C oder weniger umfasst, wobei die Korkgranulate der Trägerschicht eine Partikelgröße von 0,5-4 mm und eine Dichte von 180-220 kg/m³, vorzugsweise 1-2 mm und eine Dichte von 180-220 kg/m³, aufweisen.

5. Verfahren nach einem der vorstehenden Ansprüche, wobei die Dicke der Farbmuster- oder design 20-50 Mikrometer beträgt.

6. Verfahren nach einem der vorstehenden Ansprüche, wobei die Trennfolie eine PET-Folie ist.

7. Verfahren nach einem der vorstehenden Ansprüche, wobei die beheizte Laminiermaschine eine beheizte Kalanderanlage ist, wobei die Kalanderanlage gegebenenfalls Walzen mit einem Umfang von 520 bis 1500 mm umfasst.

8. Verfahren nach einem der Ansprüche 1 bis 6, wobei die beheizte Laminiermaschine eine beheizte Maschinenpresse ist.

9. Verfahren nach einem der vorstehenden Ansprüche, wobei die Klebeschicht ein Acrylharz oder Siliziumdioxid enthält und in der Designschicht eine Tinte verwendet wird, die einen Polyaminester mit einem Pigment enthält, wobei der Polyaminester gegebenenfalls ein Vinylchlorid-Acetat-Copolymer und ein Ester-Verdünnungsmittel enthält.

10. Verfahren nach einem der vorstehenden Ansprüche, wobei der Schritt das Aufdrucken unter Verwendung eines gravierten Zylinders durchgeführt wird.

11. Verfahren nach einem der vorstehenden Ansprüche, das ferner den Schritt des Aufbringens eines Trennmittels auf die Trennfolie umfasst, wobei der Schritt das Aufdrucken der Tintenschicht auf die Trennfolie umfasst.

12. Verfahren nach einem der vorstehenden Ansprüche, wobei die Korkoberfläche vor dem Laminierungsschritt auf eine Basisschicht der Korkfliese aufgebracht wird, wobei die Basisschicht gegebenenfalls aus einer Faserplatten- oder Holzplanke besteht.

13. Verfahren nach einem der vorstehenden Ansprüche, wobei der Laminierungsschritt die Verwendung einer Prägewalze oder einer Prägeplatte umfasst.

14. Eine verzierte Fliese, **dadurch gekennzeichnet, dass** sie gemäß dem Verfahren nach einem der vorstehenden Ansprüche hergestellt ist und i) ein Farbmuster oder -design sowie ii) eine Korkfliese umfasst, wobei die Korkfliese mindestens eine Schicht aus Korkmaterial umfasst oder vollständig aus Korkmaterial besteht.

## Revendications

1. Procédé de formation d'un carreau de liège et d'application d'un motif ou d'un dessin coloré sur un carreau de liège, comprenant les étapes suivantes :
- formation d'un carreau de liège consistant à agglomérer des granulés de liège à l'aide d'un liant et à les faire durcir à une température comprise entre 140 et 180 °C, les granulés de liège de la surface supérieure du carreau ayant une granulométrie comprise entre 0,5 et 4 mm et une densité comprise entre 450 et 600 kg/m³, formant ainsi la surface supérieure en liège du carreau de liège,
- mise en place d'un film antiadhérent ;
- impression d'une couche de motif sur le film antiadhérent ;
- application d'une couche de colle sur la couche de motif, de sorte que la couche de motif soit située entre la couche de colle et le film antiadhérent ;
- laminage de la couche de motif et de la couche de colle sur la surface supérieure en liège du carreau de liège au moyen d'une machine de laminage chauffée, de sorte que la couche de colle et la couche de motif soient, selon une technique de transfert, détachées du film antiadhérent et forment le motif ou le dessin coloré sur la surface supérieure en liège,
l'étape de laminage étant réalisée à une température comprise entre 100 et 190 °C et à une pression comprise entre 400 et 600 bars.

2. Procédé selon la revendication 1, dans lequel le carreau de liège comprend au moins une couche de liège ou est entièrement constitué de liège.

3. Procédé selon la revendication 1, dans lequel les granulés de liège de la surface supérieure en liège ont une granulométrie comprise entre 0,5 et 1 mm et une densité comprise entre 500 et 600 kg/m³.

4. Procédé selon la revendication précédente, comprenant en outre la formation d'une couche de support du carreau de liège disposée sous la surface supérieure en liège, par agglomération de granulés de liège à l'aide d'un liant et par durcissement à une température inférieure ou égale à 140 °C, les granulés de liège de la couche de support ayant une granulométrie comprise entre 0,5 et 4 mm et une densité comprise entre 180 et 220 kg/m³, de préférence entre 1 et 2 mm et une densité comprise entre 180 et 220 kg/m³.

5. Procédé selon l'une quelconque des revendications précédentes, dans lequel l'épaisseur du motif coloré ou de la couche de motif est comprise entre 20 et 50 microns.

6. Procédé selon l'une quelconque des revendications précédentes, dans lequel le film antiadhérent est un film en PET.

7. Procédé selon l'une quelconque des revendications précédentes, dans lequel la machine de laminage chauffée est une calandre chauffée, la calandre comprenant éventuellement des rouleaux ayant une circonférence comprise entre 520 et 1 500 mm.

8. Procédé selon l'une quelconque des revendications 1 à 6, dans lequel la machine de laminage chauffée est une presse chauffée.

9. Procédé selon l'une quelconque des revendications précédentes, dans lequel la couche de colle comprend une résine acrylique ou du dioxyde de silicium et la couche de motif utilise une encre comprenant un ester de polyamine associé à un pigment, l'ester de polyamine pouvant éventuellement comprendre un copolymère de chlorure de vinyle et d'acétate de vinyle ainsi qu'un diluant ester.

10. Procédé selon l'une quelconque des revendications précédentes, dans lequel l'étape d'impression est réalisée à l'aide d'un cylindre gravé.

11. Procédé selon l'une quelconque des revendications précédentes, comprenant en outre l'étape consistant à appliquer un agent antiadhérent sur le film antiadhérent, dans lequel l'étape d'impression comprend l'impression de la couche d'encre sur le film antiadhérent.

12. Procédé selon l'une quelconque des revendications précédentes, dans lequel la surface supérieure en liège est montée sur une couche de base du carreau de liège avant l'étape de la,inage, la couche de base pouvant éventuellement être une planche en panneau de fibres ou une planche de bois.

13. Procédé selon l'une quelconque des revendications précédentes, dans lequel l'étape de laminage comprend l'utilisation d'un rouleau gaufré ou d'une plaque gaufrée.

14. Carreau décoré, **caractérisé en ce qu'il** est préparé selon le procédé décrit dans l'une quelconque des revendications précédentes et comprend i) un motif ou un dessin coloré et ii) un carreau de liège, ce dernier comprenant au moins une couche de liège ou étant entièrement constitué de liège.
